(19) Europäisches Patentamt
European Patent Office
Office européen des brevets

(11) Veröffentlichungsnummer : **0 296 403 B1**

(12) # EUROPÄISCHE PATENTSCHRIFT

(45) Veröffentlichungstag der Patentschrift : **13.03.91 Patentblatt 91/11**

(51) Int. Cl.$^5$ : **C08F 285/00,** C08L 51/04, C08G 77/42

(21) Anmeldenummer : **88109079.9**

(22) Anmeldetag : **08.06.88**

(54) **Thermoplastische Silikonkautschukpfropfpolymerisate (II).**

(30) Priorität : **20.06.87 DE 3720475**

(43) Veröffentlichungstag der Anmeldung : **28.12.88 Patentblatt 88/52**

(45) Bekanntmachung des Hinweises auf die Patenterteilung : **13.03.91 Patentblatt 91/11**

(84) Benannte Vertragsstaaten : **DE FR GB IT**

(56) Entgegenhaltungen :
**EP-A- 0 217 257**
**EP-A- 0 222 127**
**EP-A- 0 246 537**

(73) Patentinhaber : **BAYER AG**
**W-5090 Leverkusen 1 Bayerwerk (DE)**

(72) Erfinder : **Lindner, Christian, Dr.**
**Riehler Strasse 200**
**W-5000 Köln 60 (DE)**
Erfinder : **Eichenauer, Herbert, Dr.**
**Goethestrasse 71**
**W-4047 Dormagen (DE)**
Erfinder : **Wittmann, Dieter, Dr.**
**Doerperhofstrasse 15**
**W-4150 Krefeld (DE)**
Erfinder : **Damrath, Volker, Dr.**
**Dierath 26**
**W-5093 Burscheid (DE)**

**EP 0 296 403 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft thermoplastische Pfropfpolymerisate aus speziellen Silikonkautschuken als Pfropfgrundlage und Polymerisaten harzbildender Monomerer als Pfropfauflage und ihre Verwendung als thermoplastische Formmasse.

Pfropfpolymerisate auf Silikonkautschuke als Pfropfgrundlage sind grundsätzlich bekannt (vgl. DE-OS 2 539 572 und DE-OS 2 421 288).

Es wurde gefunden, daß teilchenförmige Pfropfpolymerisate auf Silikonkautschuke besonders vorteilhafte Eigenschaften als thermoplastische Formmassen aufweisen, wenn der Silikonkautschuk eine Kern/Mantel-Struktur aufweist, mit einem Kautschuk aus olefinisch ungesättigten Monomeren als Kern.

Gegenstand der Erfindung sind somit thermoplastische teilchenförmige Pfropfpolymerisate aus einem Kautschuk (AB), bestehend aus einem Kern (A) aus kautschukartigem Polymerisat von olefinisch ungesättigten Monomeren mit Erweichungstemperaturen (Glastemperaturen) kleiner 0°C und einer Hülle (B) aus Organopolysiloxan, welches ein Homo- oder Interpolymerisat von Organo siloxanen darstellt, und einem auf dem Kautschuk (AB) (Pfropfgrundlage) gepfropften Polymerisat (C) aus wenigstens einem ethylenisch ungesättigten Monomeren (Pfropfauflage).

Das Gewichtsverhältnis des Kerns (A) zu der Hülle (B) beträgt vorzugsweise 0,1 zu 99,9 bis 90 zu 10, bevorzugt 10 zu 90 bis 50 zu 50. Die erfindungsgemäßen Pfropfpolymerisate haben mittlere Teilchendurchmesser ($d_{50}$) von 0,05 bis 10 µm, bevorzugt 0,1 bis 2 mm, besonders bevorzugt 0,1 bis 1 µm.

Bevorzugte Pfropfpolymerisate enthalten die Pfropfauflage (C) in Mengen von 20 bis 90, bevorzugt 30 bis 80, besonders bevorzugt 45 bis 75 Gew.-%, bezogen auf das Pfropfpolymerisat.

Die Kerne (A) aus kautschukartigem Polymerisat mit einer Erweichungstemperatur (Glastemperatur) kleiner 0°C, bevorzugt kleiner −20°C, besonders bevorzugt kleiner −40°C, besitzen selbst mittlere Teilchendurchmesser ($d_{50}$) von 0,05 bis 2 µm, bevorzugt von 0,09 bis 0,5 µm. Sie können unvernetzt, teilvernetzt oder hochvernetzt sein ; bevorzugt sind Teilchen aus wenigstens teilvernetztem Polymer. Das Kernmaterial (A) stellt ein kautschukartiges Homo- oder Interpolymerisat aus wenigstens einem olefinisch ungesättigtem Monomeren dar, insbesondere einem Dien wie Butadien, Isopren, Chloropren, einem Olefin wie Ethylen, einem Vinylester wie Vinylacetat und Vinylpropionat sowie einem Alkylacrylat wie Ethyl-, Butyl-, Hexylacrylat, d.h., Monomeren, die zur Bildung eines kautschukartigen Polymeren befähigt sind, gegebenenfalls auch zusammen mit anderen Monomeren wie Styrol, Acrylnitril, Alkylmethacrylat, Acrylsäure, Methacrylsäure, Acrylamiden, α-Methylstyrolen ; bevorzugte Kernmaterialien sind Olefinkautschuke und Alkylacrylatkautschuke.

Das Material der Hülle (B) ist ein Homo- oder Interpolymerisat von Organopolysiloxanen, die im wesentlichen aus Einheiten der allgemeinen Formel

$$R_nSiO_{\frac{4-n}{2}} \qquad (I)$$

aufgebaut sind, wobei R einen einwertigen organischen Rest darstellt und n einen Durchschnittswert von 1 bis weniger als 3 hat.

R kann ein einwertiger Kohlenwasserstoffrest, z.B. ein Alkylrest mit 1 bis 18 C-Atomen sein, z.B. Methyl, Ethyl oder ein Acrylrest mit 6 bis 10 C-Atomen wie Phenyl. R kann auch ein einwertiger mit Radikalen reaktiver Kohlenwasserstoffrest sein, insbesondere Vinyl, Allyl, Chloralkyl, Mercaptoalkyl, Acryloxypropyl. Bevorzugt sind mindestens 80% aller Reste R Methylgruppen.

Die in den erfindungsgemäßen Pfropfpolymerisaten enthaltenen Pfropfauflagen (C) sind Polymerisate von α,β-ungesättigten Monomeren, vorzugsweise von Vinylmonomeren. Geeignete Monomere sind z.B. Styrol, α-Methylstyrol, p-Methylstyrol, Halogenstyrol, Acrylnitril, Methacrylnitril, Vinylhalogenide (Vinylchlorid), Maleinimide, Maleinsäurederivate, Vinylacetat, Vinylpropionat, (Meth)Acrylsäurealkylester (mit bis zu 10 C-Atomen im Alkoholteil), Vinylether, konjugierte Diene, wie Butadien, Chloropren und α-Olefine wie Ethylen, Propen, Buten. Besonders bevorzugt sind Styrol, Acrylnitril, Propen, Ethylen und Buten.

Die Pfropfauflagen (C) können Homopolymerisate oder Copolymerisate aus wenigstens zwei der genannten Monomeren sein.

Die Pfropfauflage (C) liegt wenigstens teilweise auf dem Silikonkautschuk pfropfpolymerisiert, d.h. chemisch gebunden vor. In bevorzugten Pfropfpolymerisaten ist mehr als 50 Gew.-% der Pfropfauflage chemisch an die Pfropfgrundlage gebunden (pfropfpolymerisiert).

Die erfindugnsgemäßen Pfropfpolymerisate sind wie folgt herstellbar :

In einer ersten Stufe wird eine Emulsion des Kernmaterials (A), hergestellt nach an sich bekannten Verfahren, durch Dispersionspolymerisation des oder der entsprechenden Monomeren. Bevorzugt werden Monomere in Gegenwart oberflächenaktiver Stoffe und gegebenenfalls Initiatoren in wäßriger Emulsion polymerisiert. Durch Variieren der Polymerisationsbedingungen lassen sich die Teilchendurchmesser der Polymerisate einstellen. Die Emulsionspolymerisation wird normalerweise bei 10 bis 100°C durchgeführt. Bevorzugte Emulsionen des Kernmaterials (A) besitzen einen pH-Wert kleiner 7 und werden mit anionischen Emulgatoren, insbesondere Salzen von Sulfonsäuren oder organischen Sulfaten hergestellt. Insbesondere durch das Monomer/Emulgator/Wasser-Verhältnis lassen sich die Teilchendurchmesser der anfallenden Latices einstellen. Sollen die Kerne (A) wenigstens teilvernetzt sein, so kömnen die das Kernmaterial bildenden Monomeren in Anwesenheit polyfunktioneller Vinyl- oder Allylmonomerer polymerisiert werden, insbesondere in Mengen von bis zu 5 Gew.-%, bezogen auf die Monomeren. Geeignete vernetzende Monomere sind z.B. Divinylbenzol, Bis-acrylate, Bis-acrylamide, Acrylsäurevinylester, Triallylcyanurat, -isocyanurat, -phosphat, -citrat, Butadien, Isopren.

In einer zweiten Stufe wird in Gegenwart der Emulsion des Kernmaterials (A) der ersten Stufe das Organopolysiloxan für die Hülle (B) durch Emulsionspolymerisation hergestellt, indem man niedermolekulare Organosiloxane in dem Latex aus Stufe 1 dispergiert und (gegebenenfalls in Gegenwart einer zum Erhalt einer stabilen Emulsion benötigten Menge Emulgator sowie eines Katalysators) polymerisiert. Dabei ist eine der Polymerisation vorangestellte Emulgierung der grob dispergierten Organosiloxane mit technischen Hilfsmitteln wie z.B. schnelllaufenden Rührwerken (Ultraturrax), Kolloidmühlen oder Hochdruckhomogenisatoren nicht erforderlich. Vielmehr ist bevorzugt, gleichzeitig zu emulgieren und zu polymerisieren. Dadurch wird überraschenderweise erreicht, daß das gebildete Organopolysiloxan auf das in der ersten Stufe hergestellte Kernmaterial (A) aufpolymerisiert.

Zur Erhöhung der Polymerisationsgeschwindigkeit kann die Reaktionstemperatur auf etwa 40 bis 100°C erhöht werden.

Die Teilchendurchmesser der Polymerisate der zweiten Stufe können ebenfalls durch Variieren der Polymerisationsbedingungen eingestellt werden, z.B. durch Verwendung nichtionischer Coemulgatoren, Einstellen des Emulgator/Organosiloxan-Verhältnisses und durch die Wahl von Kernmaterialien mit geeigneten Teilchendurchmessern.

Als Organosiloxane zur Herstellung von (B) kann man bekannte Verbindungen einsetzen. Hierzu gehören vor allem cyclische Organosiloxanoligomere, z.B. Octamethylcyclotetrasiloxan und Decamethylcyclopentasiloxan. Daneben sind Alkoxysilane und Alkoxysiloxane geeignet, wobei die Alkoxygruppen 1 bis 4 Kohlenstoffatome enthalten. Beispiele geeigneter Alkoxysilane sind Methyltriethoxysilan, 3-Aminopropyltrimethoxysilan und 3-Mercaptopropylmethyldimethoxysilan.

Für das Verfahren der Stufe 2 sind ferner Polysiloxane, insbesondere $\alpha$, $\Omega$-Polysiloxandiole, eines Molekulargewichtes von 2000 bis 5000 und einer Viskosität von 50 bis 150 mPa·s bei 25°C geeignet.

Das Organopolysiloxan der Hülle (B) kann teilweise vernetzt sein. Verzweigungen oder Vernetzungen können durch Zugabe von z.B. Tetraethoxysilan oder eines Silans der allgemeinen Formel

$$R\,Si\,X_3 \quad (II)$$

wobei X eine hydrolysierbare Gruppe, insbesondere den Alkoxyrest darstellt, eingebaut werden. R hat die oben angegebene Bedeutung. Bevorzugt sind R = Methyl und R = Phenyl. Eine Vernetzung kann jedoch auch stattfinden, wenn z.B. gleichzeitig eingesetzte Vinyl- und Mercaptogruppen bei der Emulsionspolymerisation der Siloxanbestandteile miteinander reagieren ; dann ist die Zugabe eines externen Vernetzers nicht erforderlich.

Als Emulgatoren werden bekannte nichtionogene und/oder anionenaktive Emulgatoren verwendet.

Beispiele für nichtionogene Emulgatoren sind Anlagerungsprodukte von Ethylenoxid an Verbindungen mit azidem Wasserstoff, wie Fettalkohole und Fettsäuren. Der HLB-Wert der Emulgatoren ist so auszuwählen, daß er in dem Bereich liegt, in dem die Bildung von Öl-in-Wasser-Emulsionen begünstigt ist. Im allgemeinen werden Emulgatoren eines HLB-Wertes $\geqq 10$ verwendet. (HLB = hydrophilic lipophilic balance, vgl. Mc.Cutcheon, Detergents and Emulsifiers, Allured Publ. Corp. 1971).

Geeignete nichtionogene Emulgiermittel sind z.B. POE (3)-Laurylalkohol, POE (20-Oleylalkohol, POE (7)-Nonylphenol oder POE (10)-Stearat. (Die Schreibweise POE (3)-Laurylalkohol z.B. bedeutet, daß an ein Molekül Laurylalkohol 3 Einheiten Ethylenoxid = "POE" angelagert sind, wobei die Zahl 3 einen Mittelwert darstellt; die übrigen Verbindungen sind analog definiert).

Als anionaktive Emulgatoren können die Alkalisalze von Fettsäuren oder die Alkali-, Erdalkali- oder Aminsalze von organischen Sulfonsäuren, insbesondere Alkylarylsulfonsäuren, verwendet werden. Beispiele hierfür sind das Natriumsalz der Dodecylbenzolsulfonsäure und der Laurylsulfonsäure. Es ist möglich, Mischungen von nichtionogenen Emulgatoren mit anionenaktiven Emulgatoren zu verwenden.

Als Katalysatoren werden Säuren, insbesondere grenzflächenaktive Säuren, verwendet.

Beispiele für Katalysatoren sind Sulfonsäuren wie die Alkylsulfonsäuren oder Alkylarylsulfonsäuren, z.B. Dodecylbenzolsulfonsäure. Grundsätzlich können alle als Polymerisationsinitiatoren bekannten Säuren als Katalysator verwendet werden ; grenzflächenaktive Säuren sind bevorzugt.

Bei der Polymerisation der Hülle (B) muß die Bildung neuer Teilchen möglichst verhindert werden. Der Emulsionsstabilisator muß in einer zur Oberflächenbedeckung der Teilchen gerade ausreichenden Menge vorhanden sein. Die Größe der Teilchen ist durch die Reaktionsführung in weiten Grenzen zu variieren. Verwendet man als Kernmaterial (A) einen agglomerierten Latex, so erhält man große Teilchen, die mehrere Kautschukteilchen enthalten können. Man kann die Polymerisation der Hülle (B) auch so führen, daß Teilchen mit Kern-Mantel-Struktur und gleichzeitig Teilchen aus reinem Organopolysiloxan erzeugt werden. Auch solche Mischungen können erfindungsgemäß unter besonderen Umständen Verwendung finden.

In einer dritten Stufe werden nun die die Pfropfauflage bildenden Monomeren in Anwesenheit des Kautschuks radikalisch pfropfpolymerisiert, insbesondere im Temperaturbereich von 40 bis 90°C. Die Pfropfpolymerisation kann in Suspension, Dispersion oder Emulsion durchgeführt werden. Bevorzugt ist die kontinuierliche oder diskontinuierliche Emulsionspolymerisation unter Einsatz von Radikalinitiatoren (aus der Gruppe der Peroxide, Azoverbindungen, Hydroperoxide, Persulfate, Perphosphate) und gegebenenfalls anionischer Emulgatoren wie Carboniumsalze, Sulfonsäuresalze oder organischer Sulfate. Dabei bilden sich Pfropfpolymerisate mit hohen Pfropfausbeuten, d.h., ein großer Teil des sich bildenden Auflage-Polymerisats (C) wird an den Silikonkautschuk chemisch gebunden, d.h. aufgepfropft. Die spezielle Kautschukgrundlage (A + B) macht besondere Maßnahmen (die eine hohe Pfropfung ermöglichen) überflüssig.

Die so hergestellten Pfropfpolymerisate können nach bekannten Verfahren aufgearbeitet werden, z.B. durch Koagulation der Latices mit elektrolyten (Salze, Säuren oder Gemische davon) und anschließende Reinigung und Trocknung.

Die erfindungsgemäßen thermoplastischen Pfropfpolymerisate zeichnen sich durch die Kombination vieler für technische Kunststoffe wichtiger Eigenschaften aus wie Alterungsstabilität ; Thermostabilität, besonders bei Verarbeitung zu Formkörpern ; Oberflächenbeschaffenheit in Formkörpern ; Verarbeitbarkeit, Tieftemperaturzähigkeit, Bruchfestigkeit.

Erfindungsgemäße Pfropfpolymerisate können leicht als thermoplastische Formmasse verwendet werden, wenn ihr Kautschukgehalt nicht höher als 40 Gew.-% ist. Bei höheren Kautschukgehalten kann ein starres Harz zugemischt werden. Starre Harze sind vorzugsweise Styrol/Methylmethacrylat/Acrynitril-Terpolymere, Styrol- bzw. α-Methylstyrol/Acrylnitril-Copolymere, Styrol/Acrylnitril/Acrylester-Terpolymere, Methylmethacrylat-Homo-bzw. Copolymere, Styrol/Maleinsäureanhydrid-Copolymere, Styrol/Methylmethacrylat/Maleinsäureanhydrid, Terpolymere oder Mischungen dieser Harze.

Man kann die erfindungsgemäßen Pfropfpolymerisate auch mit bekannten Kautschuk-modifizierten Kunststoffen vermischen, z.B. mit ABS-Kunststoffen oder mit Acrylatkautschuk-modifizierten Harzen ("ASA-Harzen"). Man kann so die Alterungsbeständigkeit und elektrostatischen Eigenschaften von ABS ohne Beeinträchtigung der mechanischen Eigenschaften verbessern oder die mechanischen Eigenschaften von ASA-Harzen und die Oberflächenbeschaffenheit von Formkörpern daraus.

Die erfindungsgemäßen Formmassen können Farbstoffe und Pigmente, Stabilisatoren gegen Licht- und Wärmeeinwirkung, Weichmacher, Schaummittel und organische oder anorganische Füllstoffe in Körnchen-, Pulver- oder Faserform enthalten. Sie können beispielsweise durch Spritzguß oder durch Strangpressen verformt werden und sind für Formkörper jeder Art geeignet, die witterungsbeständig und schlagfest sein müssen. Beispielsweise können sie als Außenschicht eines Laminats aus mehreren verschiedenen Polymeren dienen.

In den folgenden Ausführungsbeispielen sind Teile immer Gewichtsteile.

## Beispiele

### 1. Herstellung eines Kernmaterials (A)

In einem Reaktor werden vorgelegt :

10.300 Teile Wasser, 5 Teile Na-Salz von $C_{14}$-$C_{18}$-Alkylsulfonsäuren, 800 Teile n-Butylacrylat und 4 Teile Triallylcyanurat. Nach Aufheizen auf 70°C wird die Polymerisation unter Rühren durch Zugabe einer Lösung von 30 Teilen Kaliumperoxodisulfat in 1.000 Teilen Wasser initiiert. Anschließend werden innerhalb von 5 Stunden folgende Lösungen in den Reaktor bei 70°C eingespeist :

Lösung 1 :

9150 Teile n-Butylacrylat
46 Teile Triallylcyanurat

Lösung 2 :

7000 Teile Wasser
200 Teile Na-Salz von $C_{14}$-$C_{18}$-Alkylsulfonsäuren

Danach wird innerhalb von 4 Stunden bei 70°C auspolymerisiert. Es wird ein Latex erhalten, der einen Feststoffgehalt von 35,9%, einen pH-Wert von 3,2 und einen mittleren Teilchendurchmesser ($d_{50}$-Wert) von 0,18 µm aufweist. Das Polymerisat ist teilvernetzt und besitzt einen Gelgehalt von 89%, gemessen in Dimethylformamid.

2. Herstellung von Kautschukteilchen (AB)

In einem Reaktor werden unter Stickstoffatmosphäre vorgelegt :

200 Teile Acrylatlatex (1)
5 Teile Octamethylcyclotetrasiloxan.

Die Reaktionsmischung wird auf 85°C erwärmt und zwei Stunden gerührt.

Nach Zugabe einer Lösung von 1,5 Teilen Dodecylbenzolsulfonsäure und 1,5 Teilen $C_{12}$-$C_{14}$-Alkylsulfonsäure-Natriumsalz in 125 Teilen Wasser wird 1 Stunde bei 85°C nachgerührt. Anschließend wird eine Mischung aus 95 Teilen Octamethylcyclotetrasiloxan, 2,5 Teilen Tetramethyltetravinylcyclotetrasiloxan innerhalb von 2 Stunden eindosiert, die Polymerisation wird innerhalb 24 Stunden bei 80°C zu Ende geführt und die gebildete stabile Emulsion auf Zimmertemperatur abgekühlt. Sie enthält das Mehrphasenpolymerisat in einer Konzentration von 36%. Der mittlere Teilchendurchmesser ($d_{50}$) beträgt 0,15 µm. Das Polymerisat ist teilvernetzt, der Gelgehalt beträgt 87%.

Es besteht aus 40% Acrylatkautschuk und 60% Organopolysiloxan.

3. Pfropfpolymerisat (AB + C)

In einem Reaktor werden vorgelegt :

2089 Gew.-Teile Latex (2)
1070 Gew.-Teile Wasser

Nach Initiierung mittels einer Lösung von 7,5 Gew.-Teilen Kaliumperoxodisulfat in 195 Gew.-Teilen Wasser bei 65°C werden folgende Lösungen in den Reaktor innerhalb von 4 Stunden gleichmäßig eingespeist :

Lösung 1 :

540 Gew.-Teile Styrol
210 Gew.-Teile Acrylnitril

Lösung 2 :

375 Gew.-Teile Wasser
15 Gew.-Teile Natriumsalz von $C_{14}$-$C_{18}$-Alkylsulfonsäuren.

Anschließend wird innerhalb von 4 Stunden bei 65°C auspolymerisiert. Der Monomerumsatz beträgt mehr als 98 Gew.-%. Es resultiert ein Latex mit einem Feststoffgehalt von ca. 33 Gew.-%. Nach Koagulation mit einer wäßrigen Magnesiumsulfat-Lösung, Filtration und Trocknung im Vakuum wird das Pfropfpolymerisat in Form eines weißen Pulvers erhalten.

4. Vergleich

4.1 Herstellung einer Silikonkautschukemulsion

38,4 Gew.-Teile Octamethylcyclotetrasiloxan, 1,2 Gew.-Teile Tetramethyltetravinylcyclotetrasiloxan und 1 Gew.-Teil δ-Mercaptopropylmethyldimethoxysilan werden miteinander verrührt. 0,5 Gew.-Teile Dodecylbenzolsulfonsäure werden anschließend 58,4 Gew.-Teile Wasser

innerhalb 1 Stunde zugegeben. Dabei wird intensiv gerührt. Die Voremulsion wird mit Hilfe einer Hochdruckemulgiermaschine zweimal bei 200 bar homogenisiert. Man gibt weitere 0,5 Gew.-Teile Dodecylbenzolsulfonsäure hinzu.

Die Emulsion wird 2 Stunden bei 85°C und anschließend 36 Stunden bei Zimmertemperatur gerührt. Neutralisiert wird mit Hilfe von 5 n-NaOH. Es resultiert eine stabile Emulsion mit einem Feststoffgehalt von ca. 36%. Das Polymer besitzt einen Gelgehalt von 82 Gew.-%, gemessen in Toluol, der mittlere Teilchendurchmesser ($d_{50}$) beträgt 300 nm.

4.2 Pfropfpolymerisat

In einem Reaktor werden vorgelegt :

2107 Gew.-Teile Latex (4.1)
1073 Gew.-Teile Wasser.

Nach Initiierung mit einer Lösung von 7,5 Gew.-Teilen Kaliumperoxidisulfat in 195 Gew.-Teilen Wasser bei 65°C werden folgende Lösungen innerhalb von 4 Stunden gleichmäßig in den Reaktor dosiert :

Lösung 1 :

540 Gew.-Teile Styrol
210 Gew.-Teile Acrylnitril

Lösung 2 :

370 Gew.-Teile Wasser
15 Gew.-Teile Na-Salz von $C_{14}$-$C_{18}$-Alkylsulfonsäuren.

Anschließend wird innerhalb von 4 Stunden bei 65°C auspolymerisiert. Es resultiert ein Latex mit einem Feststoffgehalt von ca. 33 Gew.-%. Nach Koagulation mit einer wäßrigen Magnesiumsulfat-Lösung, Filtration und Trocknung wird das Pfropfpolymerisat in Form eines weißen Pulvers erhalten.

5. Eigenschaften der Thermoplasten

Die in der Tabelle 1 angegebenen Formmassen werden hergestellt durch Compoundierung auf einem Banbury-Mischer BR (Pomini-Farrel) unter folgenden Mischbedingungen :

Massetemperatur : 190-225°C
Mischzeiten : 1,5-2 Min.
Cycluszeiten : 2-4 Min.

Das Mischgut fällt aus dem Banbury-Mischer auf einen Zweiwalzenstuhl (Walze 1 T = 160°C, Walze 2 T = 150°C), wird in Form eines Bandes abgenommen und nach Abkühlung granuliert.

Aus dem Granulat werden durch Spritzguß bei 240°C Normkleinstäbe hergestellt und diese nach DIN-Methoden untersucht.

Als Vergleichssubstanz wird das ABS-Pfropfpolymerisat V aus 50 Gew.-% grobteiligem hochvernetztem Polybutadien und 50 Gew.-% SAN-Polymerisat mit einem Styrol/Acrylnitril-Gew.-Verhältnis von 72 : 28 mit einem mittleren Teilchendurchmesser ($d_{50}$) von 0,4 µm eingesetzt.

Die Kerbschlagzähigkeit wurde bei Raumtemperatur ($a_k^{RT}$) und bei –40°C ($a_k^{-40°C}$) nach DIN 53 453 (Einheit : kJ/m²), die Kugeldruckhärte ($H_c$) nach DIN 53 456 (Einheit : N/mm²) und die Wärmeformbeständigkeit (Vicat B) nach DIN 53 460 (Einheit : °C) bestimmt.

**Tabelle 1:** Thermoplastische Mischungen

| Beispiel | Pfropfpolymer | (Gew.-Teile) | Harz | (Gew.-Teile) |
|---|---|---|---|---|
| 5.1 | 3.1 | (20) | SAN | (80) |
| 5.2 | 3.1 | (30) | SAN | (70) |
| 5.3 | 3.1 | (40) | SAN | (60) |
| 5.4 | 3.1 | (50) | SAN | (50) |
| 5.5 | 4.2 | (20) | SAN | (80) |
| 5.6 | 4.2 | (30) | SAN | (70) |
| 5.7 | 4.2 | (40) | SAN | (60) |
| 5.8 | 4.2 | (50) | SAN | (50) |
| 5.9 | V | (30) | SAN | (70) |
| 5.10 | V | (40) | SAN | (60) |
| 5.11 | V | (50) | SAN | (50) |

SAN = Copolymer aus 70 Gew.-% Styrol und 30 Gew.-% Acrylnitril und einer Grenzviskosität von $[\eta]$ = 0,72 dl/g (gemessen in Dimethylformamid bei $20^0$ C)

Alle Materialien enthalten 2 Gew.-Teile Pentaerythrittetrastearat als Gleitmittel

Tabelle 2: Eigenschaften der Formmassen aus Tabelle 1

| Produkt | $a_k^{RT}$ | $a_k^{-40^0 C}$ | Hc | Vicat B |
|---|---|---|---|---|
| 5.1 | 14.1 | 4.5 | 122 | 105 |
| 5.2 | 18.0 | 8.0 | 104 | 102 |
| 5.3 | 19.2 | 11.2 | 87 | 99 |
| 5.4 | 20.1 | 12.8 | 69 | 95 |
| 5.5 | 11.2 | 4.0 | 123 | 102 |
| 5.6 | 16.6 | 8.2 | 103 | 100 |
| 5.7 | 18.4 | 10.9 | 97 | 99 |
| 5.8 | 19.9 | 12.9 | 69 | 93 |
| 5.9 | 14.4 | 7.2 | 108 | 99 |
| 5.10 | 14.9 | 11.2 | 90 | 98 |
| 5.11 | 15.8 | 13.1 | 74 | 95 |

## Ansprüche

1. Thermoplastische teilchenförmige Pfropfpolymerisate aus einem Kautschuk (AB), bestehend aus einem Kern (A) aus kautschukartigem Polymerisat von olefinisch ungesättigten Monomeren mit Erweichungstemperaturen (Glastemperaturen) kleiner 0°C und einer Hülle (B) aus Organopolysiloxan, welches ein Homo- oder Interpolymerisat von Organosiloxanen darstellt und im wesentlichen aus Einheiten der Formel (I)

$$R_nSiO_{\frac{4-n}{2}} \qquad (I)$$

aufgebaut ist,
worin
R einen einwertigen organischen Rest darstellt und
n einen Durchschnittswert von 1 bis weniger als 3 hat, und einem auf den Kautschuk (AB) gepfropften Polymerisat (C) aus wenigstens einem ethylenisch ungesättigten Monomeren.

2. Verwendung der teilchenförmigen Pfropfpolymerisate gemäß Anspruch 1, gegebenenfalls in Mischung mit spröden, thermoplastischen Vinylharzen, als thermoplastische Formmasse.

## Claims

1. Thermoplastic particulate graft polymers of a rubber (AB) consisting of a core (A) of rubberlike polymer of olefinically unsaturated monomers having softening temperatures (glass temperatures) below 0°C and a shell (B) of organopolysiloxane constituting a homo or interpolymer of organosiloxanes and substantially built up of units corresponding to formula (I)

$$R_nSiO_{\frac{4-n}{2}} \qquad (I)$$

wherein

R denotes a monovalent organic group and

n has an average value from 1 to less than 3, and a polymer (C) of at least one ethylenically unsaturated monomer grafted on the rubber (AB).

2. Use of the particulate graft polymers according to Claim 1, optionally in admixture with brittle, thermoplastic vinyl resins, as thermoplastic moulding compound.

## Revendications

1. Polymères greffés thermoplastiques en particules dérivés d'un caoutchouc (AB), constitué d'un noyau (A) en polymère, semblable au caoutchouc, de monomères à non-saturation oléfinique ayant des températures de ramollissement (températures de transition vitreuse) inférieures à 0°C et d'une enveloppe (B) en organopolysiloxane, qui constitue un homopolymérisat ou un interpolymérisat d'organosiloxanes et qui est principalement édifié à partir de motifs de formule (I)

$$R_nSiO_{\frac{4-n}{2}} \qquad (I)$$

dans laquelle

R est un reste organique monovalent et

n a une valeur moyenne de 1 à moins de 3, et d'un polymérisat (C) greffé sur le caoutchouc (AB) d'au moins un monomère à non-saturation éthylénique.

2. Utilisation des polymères greffés en particules suivant la revendication 1, le cas échéant en mélange avec des résines vinyliques thermoplastiques cassantes, comme mélange thermoplastique à mouler.